# EUROPÄISCHE PATENTSCHRIFT

(11) **EP 2 878 472 B1**
(45) Veröffentlichungstag und Bekanntmachung des Hinweises auf die Patenterteilung: **14.09.2016**
(21) Anmeldenummer: 14194198.9
(22) Anmeldetag: 20.11.2014
(51) Int. Cl.: B60J 1/00, B60J 1/14, B60J 5/04, B60J 10/30, B60J 10/40, B60J 10/70, B60J 10/84

(54) **Fenstersystem für ein Wohnmobil, ein Freizeitfahrzeug oder einen Wohnwagen**
Window system for a motor home, a recreational vehicle or a caravan
Système de fenêtre pour un mobile-home, un véhicule de loisir ou une caravane

(30) Priorität: 29.11.2013 DE 102013017988
(43) Veröffentlichungstag der Anmeldung: 03.06.2015
(73) Patentinhaber: Dethleffs GmbH & Co. KG, 88316 Isny (DE)
(72) Erfinder: Gawalleck, Christoph, 73434 Aalen (DE)
(74) Vertreter: Otten, Roth, Dobler & Partner mbB Patentanwälte

(56) Entgegenhaltungen:
- CH-A5- 655 064
- DE-A1- 10 146 920
- DE-A1-102008 016 305
- DE-U1- 29 615 905

## Beschreibung

Die Erfindung betrifft ein Fenstersystem für ein Wohnmobil, ein Freizeitfahrzeug oder einen Wohnwagen gemäß dem Oberbegriff des Anspruchs 1.

Aus der DE 10 2008 016 305 A1 ist ein Fenstersystem für ein Reisemobil bekannt, welches eine Fahrzeugwand, einen Blendrahmen und einen gegenüber dem Blendrahmen bewegbaren Flügel umfasst, wobei die Fahrzeugwand eine Außenschicht, eine Mittelschicht und eine Innenschicht umfasst, wobei die Fahrzeugwand einen alle Schichten durchdringenden Ausschnitt umfasst und wobei der Ausschnitt durch einen umlaufenden Flanschrand der Fahrzeugwand begrenzt ist.

Es ist Aufgabe der Erfindung, ein Fenstersystem vorzuschlagen, welches durch eine Einbettung von Blendrahmen und Flügel in eine durch die Sichtseite der Außenschicht der Fahrzeugwand, definierte Fahrzeugoberfläche ästhetischen und aerodynamischen Ansprüchen gerecht wird.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Bei dem erfindungsgemäßen Fenstersystem steht eine Außenschicht einer Fahrzeugwand über eine Mittelschicht und eine Innenschicht der Fahrzeugwand einfassend und insbesondere vollständig umlaufend in einen Ausschnitt über oder es steht eine Außenschicht und wenigstens ein an die Außenschicht angrenzender Abschnitt einer Mittelschicht über eine Innenschicht einfassend und insbesondere vollständig umlaufend in den Ausschnitt über, wobei der Blendrahmen mit einem ersten einfassenden und insbesondere vollständig umlaufenden Schenkel unter Zwischenlage eines Dichtmittels an einer einfassenden und insbesondere vollständig umlaufenden Stirnseite und/oder an einer einfassenden und insbesondere vollständig umlaufenden Unterseite an der Außenschicht anliegt und wobei der Blendrahmen mit einer Unterseite eines zweiten einfassenden und insbesondere vollständig umlaufenden Schenkels flächig auf einer Sichtseite der Innenschicht aufliegt. Hierdurch ist der Blendrahmen in einem Freistich der Fahrzeugwand aufgenommen und steht allenfalls unwesentlich über die Außenschicht der Fahrzeugwand über, so dass die Aerodynamik im Vergleich mit einer fensterlosen Fahrzeugwand kaum beeinflusst wird und die Windgeräusche niedrig gehalten werden. Weiterhin ist eine Verletzungsgefahr insbesondere bei Kollisionen mit Personen reduziert, da das Fenstersystem bündig in die Fahrzeugaußenhaut integriert ist. Kern der Erfindung ist somit ein Fenstersystem, welches durch Ausbildung korrespondierender Flanschrandstrukturen an dem Ausschnitt der Fahrzeugwand und an dem Blendrahmen einfach montierbar ist, eine ästhetische Fahrzeugaußenansicht gewährleistet und die Aerodynamik des Fahrzeugs minimal beeinträchtigt.

Weiterhin ist es vorgesehen, den Flügel aus einem Flügelrahmen und einem Füllelement zu bilden, wobei der Flügel einen Fensterflügel oder einen Türflügel bildet. Hierdurch lassen sich mit dem gleichen Flügelrahmen Fenster und blickdichte Klappen bilden.

Es ist auch vorgesehen, das Fenstersystem mit wenigsten einem Verbindungsmittel auszustatten, durch welches bzw. durch welche der Flügel als nach außen oder nach innen öffnendes Drehelement oder als nach außen oder nach innen öffnendes Dreh-Kipp-Element oder als Schiebeelement oder als Schiebe-Kipp-Element mit dem Blendrahmen verbunden ist. Hierdurch lassen sich durch unterschiedlichste Verbindungsmittel eine Vielzahl von verschiednen Fenster- bzw. Türtypen herstellen.

Weiterhin weist die Mittelschicht der Fahrzeugwand angrenzend an die Außenschicht einen sich zu dem Ausschnitt öffnenden Hinterschnitt auf, wobei die Mittelschicht angrenzend an den Ausschnitt insbesondere ein Vollprofil umfasst, in welchem der Hinterschnitt ausgebildet ist. Hierdurch ist zwischen der Außenschicht und dem Blendrahmen ein Hohlraum gebildet, welcher geeignet ist, überschüssige Dichtmasse aufzunehmen, mit welcher der Blendrahmen mit der Außenschicht verbunden ist. Weiterhin erleichtert dieser Hinterschnitt, sofern dieser insbesondere bei einer Fahrzeugwand, welche insbesondere ein an den Ausschnitt angrenzendes Vollprofil umfasst, schon vor dem Herstellen des Ausschnitts in der Fahrzeugwand vorhanden ist, das Herstellen des Freistichs, da bei einer Fräsoperation, bei welcher die Innenschicht und die Mittelschicht abgefräst werden, keine Gefahr besteht, dass der Fräskopf der Außenschicht zu nahe kommt.

Es ist auch vorgesehen, den Blendrahmen mit einer Lippendichtung auszustatten, welche formschlüssig mit dem Blendrahmen verbunden ist und mit einem Steg an einer Oberseite der Außenschicht der Fahrzeugwand anliegt. Hierdurch erfolgt zusätzlich zu der durch die Dichtmasse gebildeten Abdichtung eine weitere Abdichtung des Blendrahmens an der Außenschicht. Weiterhin schütz die Lippendichtung auch eine einfassende und insbesondere vollständig umlaufende Kante der Außenschicht.

Weiterhin ist an dem Flügelrahmen eine weitere Lippendichtung angeordnet, welche formschlüssig mit dem Flügelrahmen verbunden ist und mit einem Steg an einer Oberseite des Flügels anliegt. Hierdurch erfolgt zusätzlich zu der durch die Dichtmasse gebildeten Abdichtung eine weitere Abdichtung des Flügelrahmens an der Oberseite des Flügels.

Die beiden Lippendichtungen sind derart ausgebildet, dass diese bei geschlossenem Flügel unter gegenseitiger Verformung aneinander anliegen und zusammen eine Schwallwasserdichtung bilden. Hierdurch ist ein zwischen dem Blendrahmen und dem Flügelrahmen liegender Hohlraum von der Oberseite der Fahrzeugwand her abgedichtet, so dass ein Eindringen von Wasser behindert wird und so dass sich in dem Hohlraum bei geschlossenem Flügel ein isolierendes Luftpolster ausbildet. Weiterhin wird durch die anliegenden Dichtungen, welche einen zwischen dem Blendrahmen und dem Flügelrahmen liegenden Spalt überbrücken, die Bildung von Luftwirbeln unterbunden und optisch eine geschlossene, vertiefungsfreie Fahrzeugaußenhaut hergestellt.

Es ist auch vorgesehen, den Blendrahmen mit einem Schenkel auszustatten, welcher den Flügelrahmen hintergreift, wobei an einem freien Ende dieses Schenkels eine Dichtung angeordnet ist, welche bei geschlossenem Flügel an einer in einen Fahrzeuginnenraum weisenden Rückseite des Flügels bzw. des Flügelrahmens dichtend anliegt. Hierdurch ist zusätzlich zu der Schwallwasserdichtung eine weitere Abdichtung zwischen dem Blendrahmen und dem Flügelrahmen gewährleistet.

Weiterhin ist es vorgesehen, das Füllelement, welches an den Flügelrahmen angrenzt, dreischichtig mit einer Außenschicht, einer Mittelschicht und einer Innenschicht auszubilden, wobei der Flügelrahmen mit einem ersten einfassenden und insbesondere vollständig umlaufenden Schenkel unter Zwischenlage eines Dichtmittels an einer einfassenden und insbesondere umlaufenden Stirnseite und/oder an einer einfassenden und insbesondere umlaufenden Unterseite an der Außenschicht anliegt und wobei der Flügelrahmen mit einer Unterseite eines zweiten einfassenden und insbesondere umlaufenden Schenkels flächig auf einer Sichtseite der Innenschicht des Füllelements anliegt. Hierdurch lässt sich der Flügelrahmen in das Füllelement integrieren, ohne dass dieser von außen sichtbar ist.

Es ist auch vorgesehen, die Mittelschicht des Füllelements angrenzend an die Außenschicht einen sich zu dem Flügelrahmen öffnenden Hinterschnitt aufweist, wobei die Mittelschicht angrenzend an den Flügelrahmen insbesondere ein Vollprofil umfasst, in welchem der Hinterschnitt ausgebildet ist. Hierdurch wird eine Anbindung des Flügelrahmens an das Füllelement geschaffen, durch welche ebenfalls ein Hohlraum zur Aufnahme von Dichtmasse entsteht, so dass ein Abdichtung zwischen dem Flügelrahmen'und dem Füllelement möglich ist, ohne dass überschüssige Dichtmasse entfernt werden muss. Weiterhin erleichtert dieser Hinterschnitt, sofern dieser schon vor dem Herstellen des Füllelements aus der Fahrzeugwand vorhanden ist, das Herstellen des Freistichs, da bei einer Fräsoperation bei welcher die Mittelschicht und die Innenschicht angefräst werden, keine Gefahr besteht, dass der Fräskopf der Außenschicht zu nahe kommt.

Es ist vorgesehen, den Blendrahmen und/oder den Flügelrahmen entweder durch ein ringförmig geschlossenes Profil oder durch wenigstens zwei miteinander verbindbare Profilabschnitte zu bilden. Hierdurch kann den unterschiedlichsten Anforderungen an die Form des Fenster- oder Türelements einfach entsprochen werden.

Weiterhin ist es vorgesehen, das ringförmig geschlossene Profil oder den bzw. die Profilabschnitte entweder einteilig oder mehrteilig auszubilden, wobei das ringförmig geschlossene Profil wenigstens zwei miteinander verbindbare ringförmig geschlossene Teilprofile umfasst oder wobei der einzelne Profilabschnitt wenigstens zwei miteinander verbindbare Teilprofile umfasst. Mit einer derartigen Ausführung lassen sich das ringförmig geschlossene Profil bzw. die Profilabschnitte einfach auf unterschiedliche Dicken einer Fahrzeugwand bzw. eines Füllelements anpassen, indem diese in unterschiedlichen Stellungen zueinander fixiert werden. Weiterhin lässt sich durch eine derartige Bauform eine thermische Trennung zwischen nach außen gerichtetem Teilprofil und nach innen gerichtetem Teilprofil herstellten. Hierbei ist es insbesondere vorgesehen die nach außen und innen gerichteten Teilprofile durch ein drittes, thermisch isolierendes Teilprofil miteinander zu verbinden.

Es ist auch vorgesehen, den Blendrahmen und/oder den Flügelahmen zusätzlich zu den Profilabschnitten, welche Seitenelemente bilden, mit Eckelemente auszustatten, welche die Seitenelemente verbinden, wobei die Eckelemente und die Seitenelemente derart, insbesondere durch Steckverbindungen verbindbar sind, dass bei vollständig zusammengestecktem Blendrahmen eine umlaufende Nut zur Aufnahme eines Ankerstegs der Lippendichtung gebildet ist. Derartige Blendrahmen öder Flügelrahmen lassen sich einfach auf unterschiedliche Ausschnittsgrößen anpassen.

Schließlich ist es vorgesehen, eine in der Nut des Eckelements geführte Lippendichtung auf einem Radius zu führen, welcher sich wenigstes um einen Faktor 5 von einem Radius unterscheidet, auf welchem eine Dichtung an einer Kante eines Schenkels geführt ist. Hierdurch ist es möglich, ohne zusätzlich Bauteile auf einer Außenseite und auf einer Innenseite einer Fahrzeugwand unterschiedliche Radienverläufe der äußeren und der inneren Dichtung zu realisieren, so dass unterschiedlichen Gestaltungswünschen an das Fahrzeugäußere und an das Fahrzeuginnere einfach entsprochen werden kann.

Im Sinne der Erfindung ist es vorgesehen, dass jede Schicht auch mehrere Unterschichten umfassen kann. Eine derartige mehrschichtige Ausbildung aus wenigstens zwei Unterschichten ist insbesondere bei der Mittelschicht und/oder insbesondere bei der Innenschicht vorgesehen. In diesem Sinne ist es auch vorgesehen, dass eine Schicht aus einem Verbundwerkstoff oder durch eine Mehrschichtplatte gebildet ist.

Im Sinne der Erfindung wird unter einer Fahrzeugwand jede Wandung des Fahrzeugs verstanden. Insbesondere ist im Sinne der Erfindung unter einer Fahrzeugwand auch eine Bugwand und/oder eine Heckwand und/oder eine Dachwand des Fahrzeugs zu verstehen.

Im Sinne der Erfindung ist der Begriff einfassend entweder in einer ersten Variante als vollständig bzw. ringförmig geschlossen umlaufend oder in einer zweiten Variante als teilweise und insbesondere dreiseitig umlaufend zu verstehen.

Weitere Einzelheiten der Erfindung werden in der Zeichnung anhand von schematisch dargestellten Ausführungsbeispielen beschreiben, wobei in den Schnittansichten zur Erhaltung der Übersichtlichkeit auf eine Schraffur geschnittener Bauteile verzichtet wurde.

Hierbei zeigt:
- Figur 1:: eine Seitenansicht auf ein Freizeitfahrzeug mit aufgeschnitten dargestellter rechter Seitenwand und einem Ausschnitt in der linken Seitenwand;
- Figur 2:: das aus der Figur 1 bekannte Freizeitfahrzeug.mit einem in den Ausschnitt eingesetzten Blendrahmen;
- Figur 3:: eine Schnittansicht durch ein erfindungsgemäßes Fenstersystem bei teilweise ausgeblendeten Bauteilen;
- Figur 4:: eine Schnittansicht durch ein erfindungsgemäßes Fenstersystem bei eingeblendeten Bauteilen;
- Figur 5:: eine Schnittansicht durch ein erfindungsgemäßes Fenstersystem im Bereich eines Verbindungsmittels zwischen Blendrahmen und Flügel;
- Figur 6:: eine perspektivische Ansicht des in der Figur 4 gezeigten Fenstersystems;
- Figur 7:: eine Draufsicht auf eine schematische Darstellung eines modularen Blendrahmens, welcher Eckelemente und Seitenelemente umfasst,
- Figur 8: und 9: perspektivische Ansichten eines der Eckelemente des modularen Blendrahmens und
- Figur 10, 11, 12:: Schnittansichten durch weitere Ausführungsvarianten von erfindungsgemäßen Fenstersystemen bei teilweise ausgeblendeten Bauteilen.

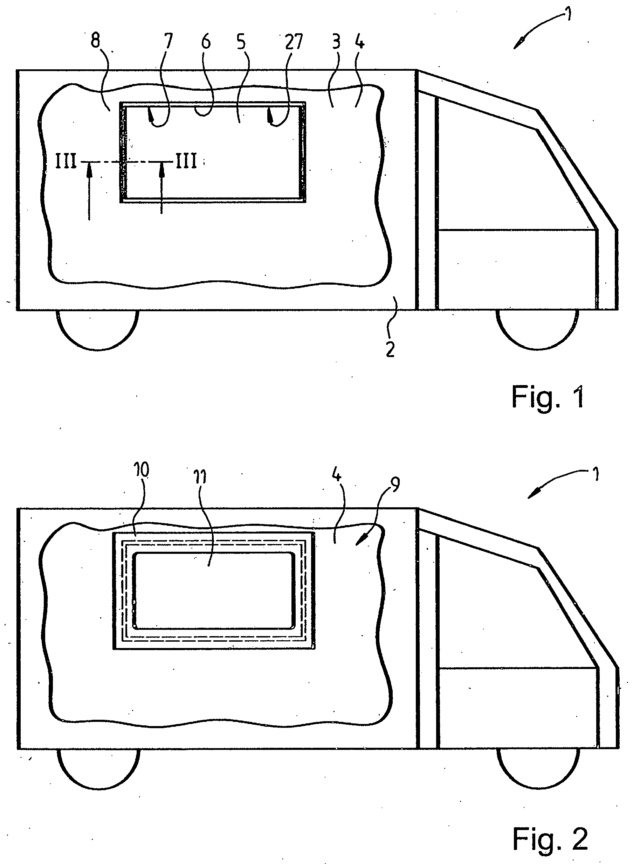

In der Figur 1 ist in schematischer Ansicht ein Freizeitfahrzeug 1 in Seitenansicht gezeigt, wobei eine rechte Fahrzeugwand 2 des Freizeitfahrzeugs 1 aufgebrochen dargestellte ist und den Blick auf eine Innenseite 3 einer linken Fahrzeugwand 4 des Freizeitfahrzeugs 1 frei gibt. Hierbei weist die linke Fahrzeugwand 4 einen Ausschnitt 5 auf, welcher die linke Fahrzeugwand 4 durchbricht. Die linke Fahrzeugwand 4 ist mehrschichtig aufgebaut und umfasst eine Außenschicht 6, eine Mittelschicht 7 und eine Innenschicht 8. Der Ausschnitt 5 durchdringt alle drei Schichten 6, 7 und 8.

In der Figur 2 ist das aus der Figur 1 bekannte Freizeitfahrzeug 1 nochmals dargestellt, wobei das Freizeitfahrzeug 1 in der Figur 2 ein vollständiges Fenstersystem 9 zeigt. Das Fenstersystem 9 umfasst die linke Fahrzeugwand 4 einen Blendrahmen 10 und einen gegenüber dem Blendrahmen 10 beweglichen Flügel 11. Hierbei ist der Blendrahmen 10 in den Ausschnitt 5 (siehe Figur 1), welcher durch einen einfassenden bzw. umlaufenden Flanschrand 27 (siehe Figur 1) begrenzt ist, eingesetzt. Aus der Figur 1 geht auch hervor, dass die Außenschicht 6 über die Mittelschicht 7 und die Innenschicht 8 in den Ausschnitt 5 hinein ragt. Abweichend von dem in den Figuren 1 und 2 dargestellten Ausführungsbeispiel ist es auch vorgesehen, einen Ausschnitt in einer Fahrzeugwand so anzuordnen, dass dieser derart an einen Randbereich der Fahrzeugwand angrenzt, dass der Ausschnitt von der Fahrzeugwand nur an drei Seiten durch einen Flanschrand bzw. einen im Randbereich der Fahrzeugwand eingefasst ist. Somit umläuft der Flanschrand den Ausschnitt nur teilweise und nicht vollständig. Auch die übrigen einfassenden Komponenten und einfassenden Bauteile sind dann entsprechend als teilweise umlaufende Komponenten und teilweise umlaufende Bauteile ausgebildet. Ein derartiger Ausschnitt ist beispielsweise für Wohnraumtüren oder Garagenklappen vorgesehen und öffnet sich insbesondere zu einem unteren Randbereich der Fahrzeugwand.

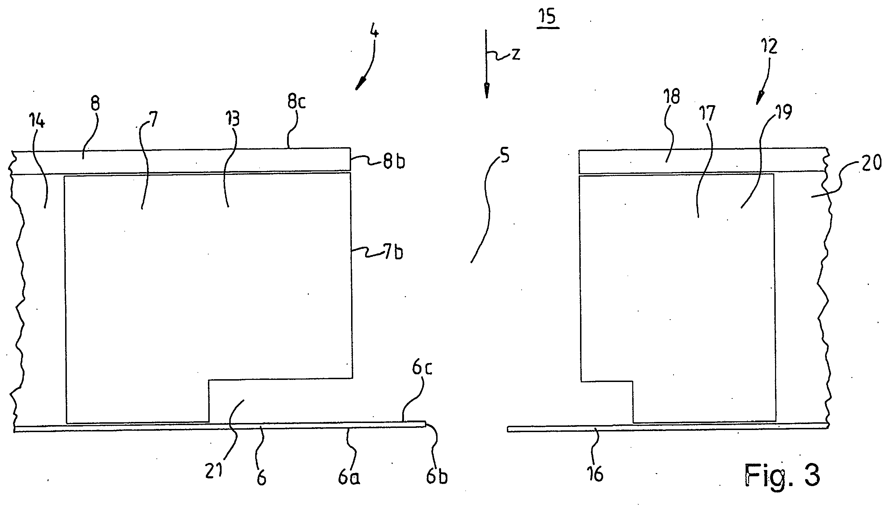

In der Figur 3 ist nun ein Schnitt entsprechend der in der Figur 1 gezeigten Schnittlinie III-III durch die linke Fahrzeugwand 4 gezeigt, wobei auch ein Füllelement 12 des Flügels 11 im Schnitt gezeigt ist. Im Schnitt ist die Außenschicht 6 der Fahrzeugwand 4 erkennbar, welche über die Mittelschicht 7 und die Innenschicht 8 in den Ausschnitt 5 hineinragt. Die Außenschicht 6 weist eine Oberseite bzw. Außenseite 6a, eine Stirnseite 6b und eine Unterseite 6c auf. Die Mittelschicht 7 weist zu dem Ausschnitt 5 hin eine Stirnseite 7b auf und ist zu dem Ausschnitt 5 hin durch ein Vollprofil 13 gebildet. Anschließend an das Vollprofil 13 ist die Mittelschicht 7 durch Hartschaum 14 und alternativ durch ein Isoliermaterial mit vergleichbaren Eigenschaften gebildet. Die Innenschicht 8 weist zu dem Ausschnitt 5 hin ebenfalls eine Stirnseite 8b auf. Weiterhin weist die Innenschicht 8 einen in einen Fahrzeuginnenraum 15 weisende Sichtseite 8c auf. Das Füllelement 12 ist vergleichbar zu der Fahrzeugwand 4 aufgebaut und umfasst eine Außenschicht 16, eine Mittelschicht 17 und eine Innenschicht 18, wobei die Mittelschicht 17 ein randseitig einfassendes bzw. umlaufendes Vollprofil 19 und Hartschaum 20 umfasst. Sowohl bei der Fahrzeugwand 4 als auch bei dem Füllelement 12 sind die Schichten miteinander verklebt. Die Fahrzeugwand 4 weist im Bereich ihrer Mittelschicht 7 zu der Außenschicht 6 hin einen Hinterschnitt 21 auf, welcher sich zu dem Ausschnitt 5 öffnet. Es ist vorgesehen, das Füllelement als blickdichtes Füllelement auszubilden und hier insbesondere das Material zu verwenden, welches auch für die Fahrzeugwand Verwendung findet. Alternativ ist es vorgesehen, das Füllelement zumindest in einem Bereich durchscheinend oder durchsichtig auszuführen. Hierbei das Füllelement beispielsweise als Isolierglasscheibe ausgebildet, welche mit dem Flügelrahmen verklebt ist.

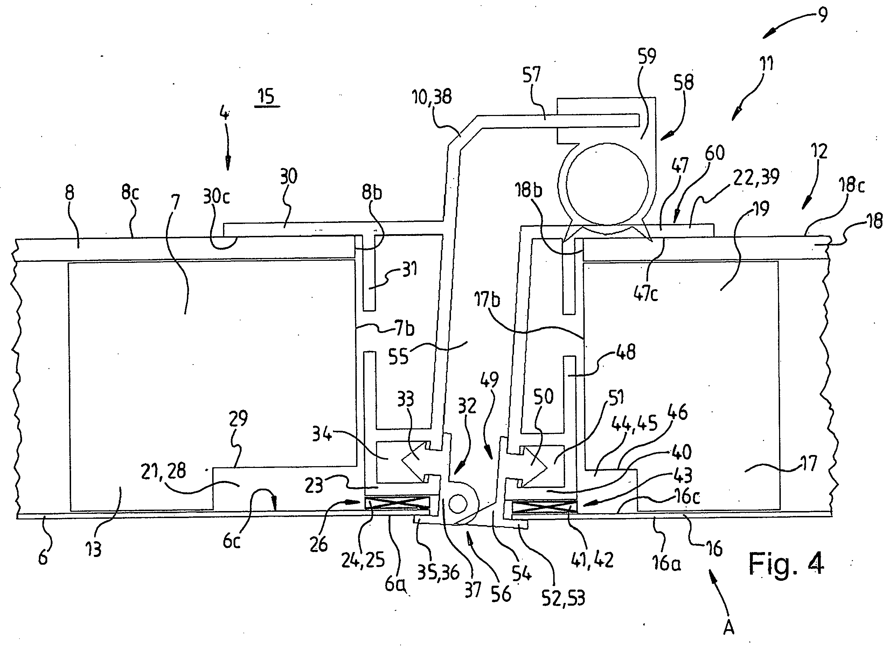

In der Figur 4 ist nun das gesamte Fenstersystem 9 in geschnittener Detailansicht dargestellt. Im Vergleich zu der Figur 3 sind zusätzlich zu der Fahrzeugwand 4 und dem Füllelement 12 der Blendrahmen 10 und ein Flügelrahmen 22 gezeigt. Der Flügelrahmen 22 bildet zusammen mit dem Füllelement 12 den Flügel 11, welcher durch den Blendrahmen 10 gehalten ist. Der Blendrahmen 10 umfasst einen ersten Schenkel 23, welcher einfassend bzw. umlaufend einer Unterseite 6c der Außenschicht 6 gegenüberliegt und mit dieser durch ein Dichtmittel 24 derart verbunden ist, dass der Blendrahmen 10 die Außenschicht 6 abstützt. Hierbei bildet das Dichtmittel 24 auch ein Klebemittel 25, welches ein Ablösen der Außenschicht 6 von dem Blendrahmen 10 verhindert. Dadurch dass hinter einem durch das Dichtmittel 24 gefülltem Spalt 26 zwischen dem Blendrahmen 10 und der Außenschicht 6 der Hinterschnitt 21 angeordnet ist, kann überschüssiges Dichtmittel 24 von der Fahrzeugwand 4 aufgenommen werden und es besteht nicht die Gefahr, dass bei der Montage überschüssiges Dichtmittel 24 in großen Mengen in Richtung des Flügelrahmens 22 austritt und zeitaufwendig entfernt werden muss. Insofern bildet der Hinterschnitt 21 ein Reservoir 28 für überschüssiges Dichtmittel 24. Der Hinterschnitt 21 ist hierbei in dem Vollprofil 13 als Absatz 29 ausgebildet, wobei das Vollprofil 13 diesen Absatz 29 schon vor der Herstellung der Fahrzeugwand 4 aufweist. Mit einer Unterseite 30c eines zweiten Schenkels 30 liegt der Blendrahmen 10 an der Sichtseite 8c der Innenschicht 8 an. Gemäß einer Ausführungsvariante ist der zweite Schenkel 30 mit der Fahrzeugwand 4 verklebt und/oder verschraubt und/oder verklemmt und/oder verrastet. Mit einem dritten Schenkel 31, welcher die Schenkel 23 und 30 verbindet und welcher als unterbrochener Schenkel ausgeführt ist, liegt der Blendrahmen 10 an der Stirnseite 7b der Mittelschicht 7 und an der Stirnseite 8b der Innenschicht 8 an. Zwischen dem Blendrahmen 10 und dem Wandelement 4 ist einfassend bzw. umlaufend oder wenigstens an einer Seite ein Toleranzspalt ausgebildet, welcher das Einsetzen des Blendrahmens 10 in das Wandelement 4 erleichtert. Gemäß einer Ausführungsvariante ist der dritte Schenkel 31 mit der Fahrzeugwand 4 verklebt und/oder verschraubt.

Weiterhin umfasst der Blendrahmen 10 eine Lippendichtung 32. Diese ist mit einem Ankersteg 33 in einer einfassenden bzw. umlaufenden Nut 34 des Blendrahmens 10 verankert und liegt mit einem Steg 35, welcher eine Lippe 36 bildet, an der Oberseite 6a der Außenschicht 6 an, wobei ein den Ankersteg 33 und den Steg 35 verbindender Mittelabschnitt 37 der Lippendichtung 32 in Richtung des Flügels 12 vorsteht. Der Blendrahmen 10 ist durch ein erstes ringförmig geschlossenes Profil 38 gebildet, welches entsprechend dem Ausschnitt 5 geformt ist. Der Flügelrahmen 22 bildet ein zweites ringförmig geschlossenes Profil 39, welches derart auf den Blendrahmen 10 angepasst ist, dass der aus dem Flügelrahmen 22 und dem Füllelement 12 bestehende Flügel 11 gegenüber dem Blendrahmen 10 bewegbar und insbesondere aus der Fahrzeugwand 4 heraus nach außen aufklappbar ist.

Der Flügelrahmen 22 umfasst einen ersten Schenkel 40, welcher einfassend bzw. umlaufend einer Unterseite 16c der Außenschicht 16 gegenüberliegt und mit dieser durch ein Dichtmittel 41 derart verbunden ist, dass der Flügelrahmen 22 die Außenschicht 16 abstützt. Hierbei bildet das Dichtmittel 41 auch ein Klebemittel 42, welches auch ein Ablösen der Außenschicht 16 von dem Flügelrahmen 22 verhindert. Dadurch dass hinter einem durch das Dichtmittel 41 gefüllten Spalt 43 zwischen dem Flügelrahmen 22 und der Außenschicht 16 ein Hinterschnitt 44 in dem Vollprofil 19 ausgebildet ist, kann überschüssiges Dichtmittel 41 aufgenommen werden und es besteht nicht die Gefahr, dass bei der Montage überschüssiges Dichtmittel 41 in großen Mengen in Richtung des Blendrahmens 10 austritt und zeitaufwendig entfernt werden muss. Insofern bildet der Hinterschnitt 44 ein Reservoir 45 für überschüssiges Dichtmittel 41. Der Hinterschnitt 44 ist hierbei in dem Vollprofil 19 als Absatz 46 ausgebildet, wobei das Vollprofil 19 diesen Absatz 46 schon vor der Herstellung der Flügels 12 aufweist. Mit einem zweiten Schenkel 47 liegt der Flügelrahmen 22 mit einer Unterseite 47c an einer Sichtseite 18c der Innenschicht 18 an. Gemäß einer Ausführungsvariante ist der zweite Schenkel 47 mit dem Füllelement 12 verklebt und/oder verschraubt und/oder verklemmt und/oder verrastet. Mit einem dritten Schenkel 48, welcher die Schenkel 40 und 47 verbindet und welcher als unterbrochener Schenkel ausgeführt ist, liegt der Flügelrahmen 22 an einer Stirnseite 17b der Mittelschicht 17 und an einer Stirnseite 18b der Innenschicht 18 an. Gemäß einer Ausführungsvariante ist der dritte Schenkel 48 mit dem Füllelement 12 verklebt und/oder verschraubt und/oder verklemmt und/oder verrastet.

Weiterhin umfasst der Flügelrahmen 22 eine Lippendichtung 49. Diese ist mit einem Ankersteg 50 in einer einfassenden bzw. umlaufenden Nut 51 des Flügelrahmens 22 verankert und liegt mit einem Steg 52, welcher eine Lippe 53 bildet, an einer Oberseite bzw. Außenseite 16a der Außenschicht 16 an, wobei ein den Ankersteg 50 und den Steg 52 verbindender Mittelabschnitt 54 der Lippendichtung 49 in Richtung des Blendrahmens 10 vorsteht. Der Flügelrahmen 22 ist durch das ringförmig geschlossene Profil 39 gebildet, welches in seiner Form an den Verlauf des Blendrahmens 10 angepasst ist.

Die beiden Lippendichtungen 32, 49 wirken in einem geschlossenen Zustand A der Flügels 11 - wie dieser in der Figur 4 gezeigt ist - so zusammen, dass diese unter gegenseitiger Verformung einen zwischen dem Flügelrahmen 22 und dem Blendrahmen 10 liegenden Spalt 55 als Schwallwasserdichtung 56 abdichten.

Weiterhin umfasst der Blendrahmen 10 einen vierten Schenkel 57, welcher den Flügelrahmen 22 derart allseitig hintergreift, dass zwischen dem vierten Schenkel 57 und dem zweiten Schenkel 47 des Flügelrahmens 22 ein einfassender bzw. umlaufender Spalt 58 gebildet ist, welcher bei geschlossenem Flügel 11 durch eine an dem vierten Schenkel 57 angeordnete Dichtung 59 verschlossen ist. Hierbei liegt die Dichtung 59 an einer in den Fahrzeuginnenraum 15 weisenden Rückseite 60 des Flügels 11 an.

Bezüglich der Außenschicht der Fahrzeugwand ist es vorgesehen, diese als Metallblech, insbesondere Aluminiumblech oder Kunststoffschale oder GFK-Schale oder Karbonschale auszubilden. Durch die definierten Eigenschaften, welche derartige Werkstoffe bezüglich ihrer Steifigkeit aufweisen, ist eine Abdichtung mit Hilfe einer Dichtungsmasse und/oder eine Lippendichtung zuverlässig und genügt den hohen Anforderungen an Wohnmobile, Freizeitfahrzeuge und Wohnwagen.

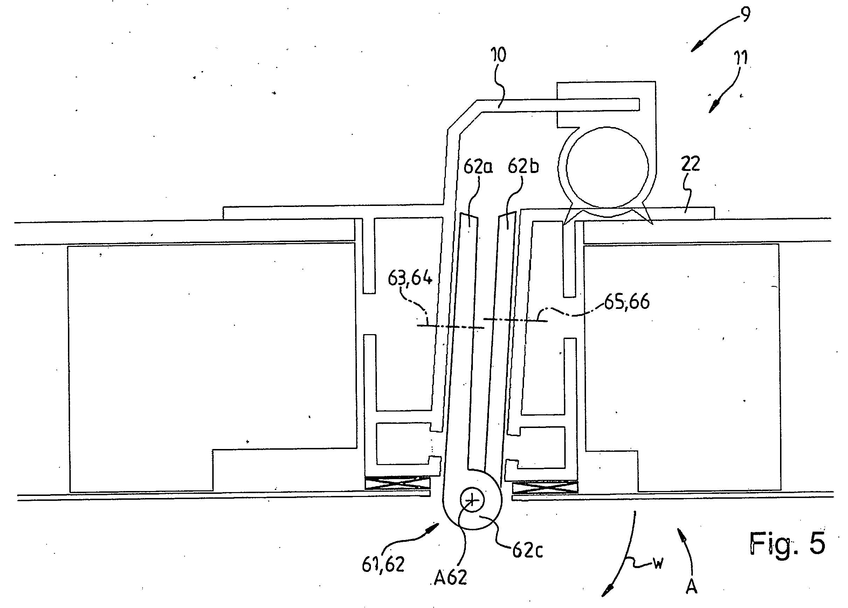

In der Figur 5 ist unter Weglassung der Schwallwasserdichtung schematisch dargestellt wie der Blendrahmen 10 und der Flügelrahmen 22 des Fenstersystems 9 durch ein Verbindungsmittel 61 verbunden sind. Hierbei ist das Verbindungsmittel 61 als Drehgelenk 62 ausgebildet, welches einen ersten Schenkel 62a, einen zweiten Schenkel 62b und ein die beiden Schenkel 62a, 62b drehbar um einen Achse A62 verbindendes Gelenk 62c umfasst. Schematisch ist ein erstes Befestigungsmittel 63 angedeutet, welches den ersten Schenkel 62a mit dem Blendrahmen 10 verbindet. Das Befestigungsmittel 63 ist insbesondere als Schraube 64 ausgeführt. Schematisch ist auch ein zweites Befestigungsmittel 65 angedeutet, welches den zweiten Schenkel 62b mit dem Flügelrahmen 22 verbindet. Das Befestigungsmittel 65 ist insbesondere als Schraube 66 ausgeführt. Aus der dargestellten, geschlossenen Stellung A wird der Flügel 11 in eine Drehrichtung w geöffnet und dreht sich hierbei um die Achse A62.

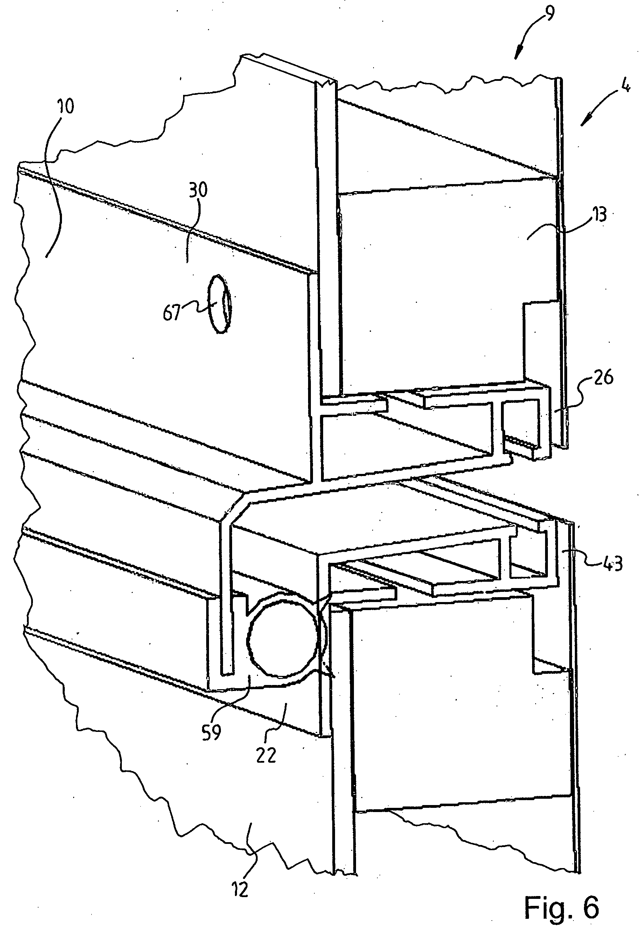

Der in den Figuren 3, 4 und 5 gezeigte Ausschnitt ist in der Figur 6 ergänzend noch in perspektivischer Ansicht gezeigt, wobei hier zu einer Erhaltung der Übersichtlichkeit auf eine Darstellung der Schwallwasserdichtung und der Dichtmittel verzichtet wurde, so dass die Spalte 26 und 43 erkennbar sind, welche durch die Dichtmittel verschlossen werden. In der Figur 6 ist in dem zweiten Schenkel 30 des Blendrahmens 10 auch eine Bohrung 67 erkennbar, durch welche der Blendrahmen 10 mit der Fahrzeugwand 4 verschraubt wird, wobei die Bohrung 67 so auf das Vollprofil 13 ausgerichtet ist, dass eine nicht dargestellte Schraube durch die Bohrung 67 in das Vollprofil 13 eindrehbar ist und so eine besonders belastbare Verbindung zwischen dem Blendrahmen 10 und der Wand 4 hergestellt wird. Der gesamte Blendrahmen 10 umfasst eine Vielzahl solcher auf das Vollprofil 13 ausgerichteter Bohrungen. Auch in dem Flügelrahmen 22 sind entsprechende Bohrungen vorhanden, wobei diese in der Darstellung der Figur 6 durch die Dichtung 59 verdeckt werden. Gemäß einer nicht dargestellten Ausführungsvariante ist es vorgesehen das Füllelement 12 als Einfach- oder Mehrfachverglasung auszuführen.

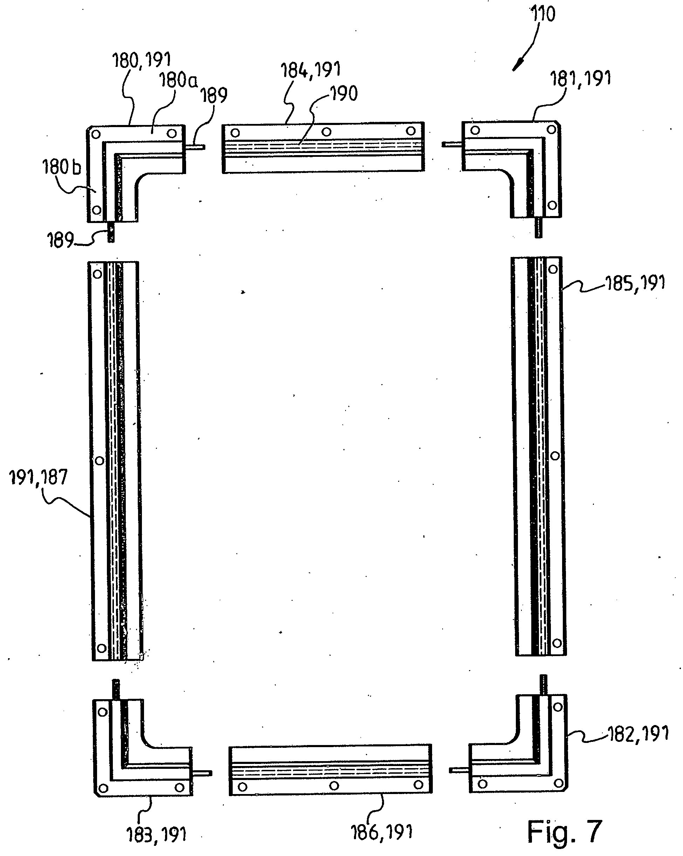

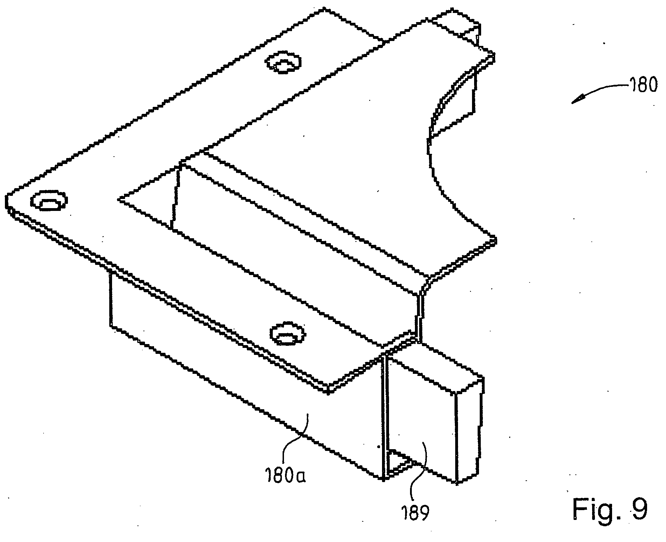

In den Figuren 7 bis 9 ist nun noch ein weiterer Blendrahmen 110 in Draufsicht und perspektivischen Ansichten auf ein Eckelement 180 gezeigt. Im Gegensatz zu dem oben beschrieben, einteiligen Blendrahmen, ist der Blendrahmen 110 mehrteilig ausgebildet und umfasst vier Eckelemente 180, 181, 182, 183 und vier Schenkel 184, 185, 186, 187. Die Eckelemente 180 bis 183 sind alle gleich ausgebildet und weisen in Verlängerung ihrer Arme 180a, 180b Nasen 189 auf. Die Schenkel 184 - 187 sind ebenfalls alle gleich ausgebildet und unterscheiden sich nur in ihren Längen, wobei sie paarweise gleiche Längen aufweisen. Zur Aufnahme der Nasen 189 weisen die Schenkel durchgehende Tunnel 190 auf. Hierdurch können die Schenkel entsprechend den Anforderungen an die Abmessungen des Blendrahmens 110 gekürzt werden und erlauben immer das Einstecken der Nasen der anschließenden Eckelemente. Die Eckelemente 180 bis 183 und die Schenkel 184 bis 187 bilden alle einzelne Profilabschnitte 191. Gemäß nicht dargestellter Ausführungsvarianten ist durch die Verwendung entsprechender Eckelemente auch trapezförmige oder dreieckförmige Fenstergeometrien herstellbar. Weiterhin ist es gemäß einem nicht dargestellten Ausführungsbeispiel auch vorgesehen, dass der gesamte Blendrahmen aus zwei in der Draufsicht U-förmigen Blendrahmenteilen zusammensetzbar ist.

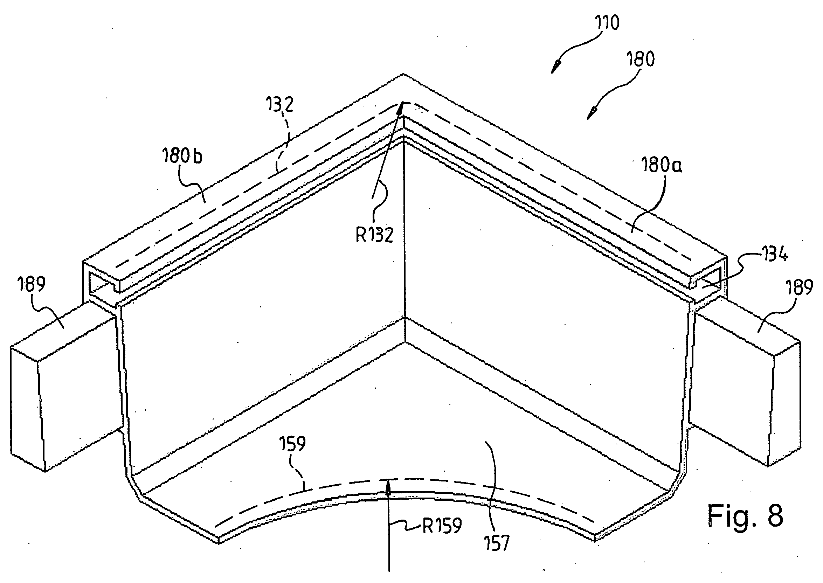

In der perspektivischen Darstellung des Eckelements 180, welche die Figur 8 zeigt, ist erkennbar, dass dieses eine Nut 134 aufweist, diese Nut 134 ist entsprechend auch in den anderen Eckelementen und in den Schenkeln ausgebildet, so dass einfassend bzw. umlaufend eine schematisch angedeutete Lippendichtung 132 eingelegt werden kann. An einem Rand eines Schenkels 157 des einen Bestandteil des Blendrahmens 110 bildenden Eckelements 180 ist eine schematische angedeutete Dichtung 159 befestigt. Ein Radius R132, mit welchem die Lippendichtung 132 an dem Eckelement 180 geführt ist, ist um mehr als den Faktor 5 kleiner als ein Radius R159, mit welchem die Dichtung 159 an dem Eckelement geführt ist. Erfindungsgemäß ist es weiterhin vorgesehen, analog zu dem Blendrahmen auch den Flügelrahmen entsprechend mehrteilig auszubilden, so dass sich mit minimalem Bearbeitungsaufwand den individuellen Anforderungen entsprechende Blend- und Flügelrahmen herstellen lassen.

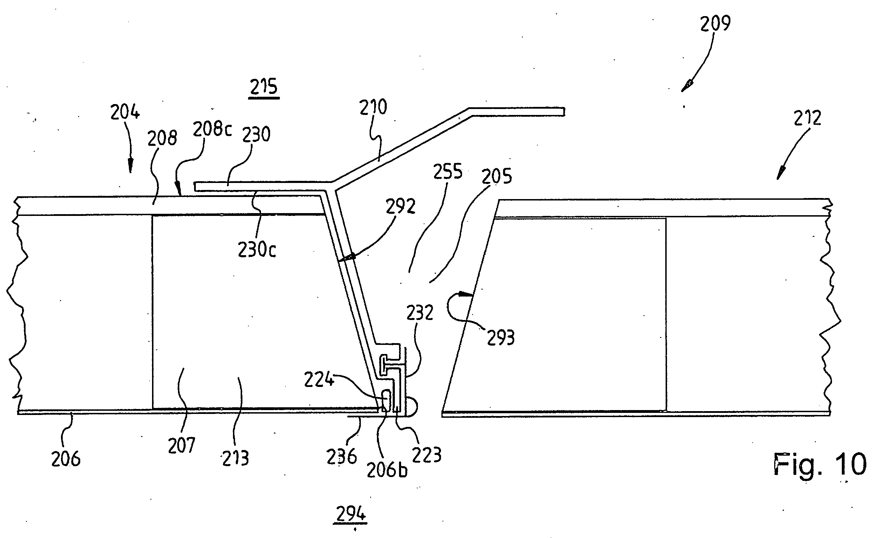

In der Figur 10 ist nun ein weiteres Fenstersystem 209 in geschnittener Detailansicht dargestellt. Im Vergleich zu der Figur 4 sind hier nur eine Fahrzeugwand 204, ein Füllelement 212 und ein Blendrahmen 210 gezeigt. Auf eine Darstellung eines mit dem Füllelement 212 verbundenen und diese umgebenden Flügelrahmens wurde verzichtet. Im Unterschied zu der in der Figur 4 dargestellten Ausführungsvariante eines Fenstersystems weist die in der Figur 10 gezeigte Fahrzeugwand 204 zu einem Spalt 255 hin eine Gehrung 292 auf. Hierbei stehen eine Außenschicht 206 und eine an die Außenschicht 206 angrenzende Mittelschicht 207 über eine Innenschicht 208 einfassend bzw. umlaufend in einen Ausschnitt 205 der Fahrzeugwand 204 über, in welchem das Füllelement 212 aufgenommen ist. Das Füllelement 212 weist zu der Fahrzeugwand 204 bzw. zu dem Spalt 255 hin ebenfalls eine Gehrung 293 auf. Hierbei verlaufen die beiden Gehrungen 292 und 293 so, dass sich der Ausschnitt 205 von einem Fahrzeuginnenraum 215 zu einer Fahrzeugumgebung 294 hin keilförmig verjüngt. Die Mittelschicht 207 ist vergleichbar zu der in der Figur 4 dargestellten Ausführungsvariante aufgebaut und umfasst zu dem Spalt 255 hin ein Vollprofil 213. Der Blendrahmen 210 liegt mit einem ersten Schenkel 223 unter Zwischenlage eines Dichtmittels 224 an einer einfassenden bzw. umlaufenden Stirnseite 206b der Außenschicht 206 an. Eine Lippendichtung 232 überdeckt mit einer Lippe 236 den Blendrahmen 210, das Dichtmittel 224 und einen an den Blendrahmen 210 angrenzenden Bereich der Außenschicht 206. Der Blendrahmen 210 liegt mit einer Unterseite 230c eines zweiten einfassenden bzw. umlaufenden Schenkels 230 flächig auf einer Sichtseite 208c der Innenschicht 208 auf.

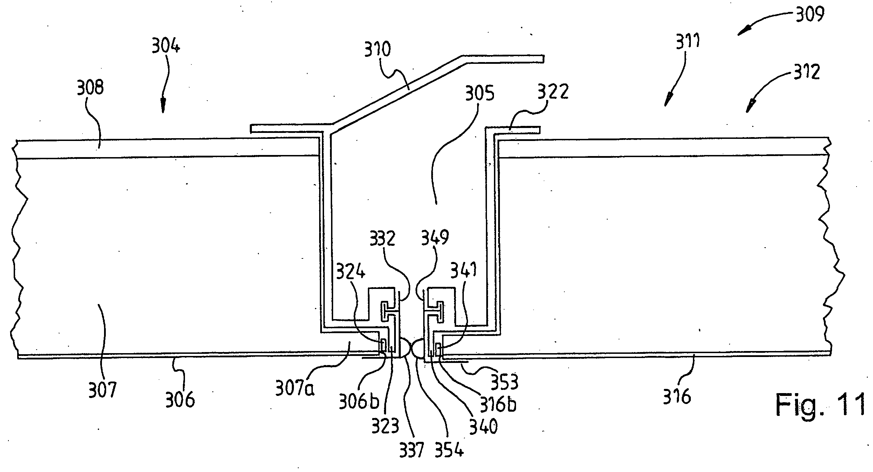

In der Figur 11 ist nun ein weiteres Fenstersystem 309 in geschnittener Detailansicht dargestellt. Wie in der Figur 4 sind hier eine Fahrzeugwand 304, ein Blendrahmen 310 und ein Flügel 311 gezeigt, wobei der Flügel 311 ein Füllelement 312 und einen Flügelrahmen 322 umfasst. Im Unterschied zu der in der Figur 4 dargestellten Ausführungsvariante eines Fenstersystems stehen hier eine Außenschicht 306 und ein an die Außenschicht 306 angrenzender Abschnitt 307a einer Mittelschicht 307 über eine Innenschicht 308 einfassend bzw. umlaufend in einen Ausschnitt 305 über. Hierbei ist die Fahrzeugwand 304 materialeinheitlich ohne Einbettung eines Vollprofils ausgebildet und besteht beispielsweise aus Polyurethan oder EPS. Der schematisch dargestellte Blendrahmen 310 liegt mit einem ersten einfassenden bzw. umlaufenden Schenkel 323 unter Zwischenlage eines Dichtmittels 324 an einer einfassenden bzw. umlaufenden Stirnseite 306b der Außenschicht 306 an. Eine schematisch dargestellte Lippendichtung 332 ist an dem Blendrahmen 310 gehalten und überdeckt den Blendrahmen 310 das Dichtmittel 324 und einen an den Ausschnitt 305 grenzenden Abschnitt der Außenschicht 306. Die Lippendichtung 332 steht bei geschlossenem Flügel 311 mit einem Mittelabschnitt 337 in dichtendem Kontakt mit einem Mittelabschnitt 354 einer Lippendichtung 349, welche an dem Flügelrahmen 322 befestigt ist. Auch der Flügelrahmen 322 ist so ausgeführt, dass dieser unter Zwischenlage eines Dichtmittels 341 mit einem ersten Schenkel 340 an einer Stirnseite 316b einer Außenschicht 316 des Füllelements 312 anliegt. Hierbei überdeckt eine Lippe 353 der Lippendichtung 349 den ersten Schenkel 340 des Flügelrahmens 322, das Dichtmittel 341 und einen einfassenden bzw. umlaufenden Abschnitt der Außenschicht 316.

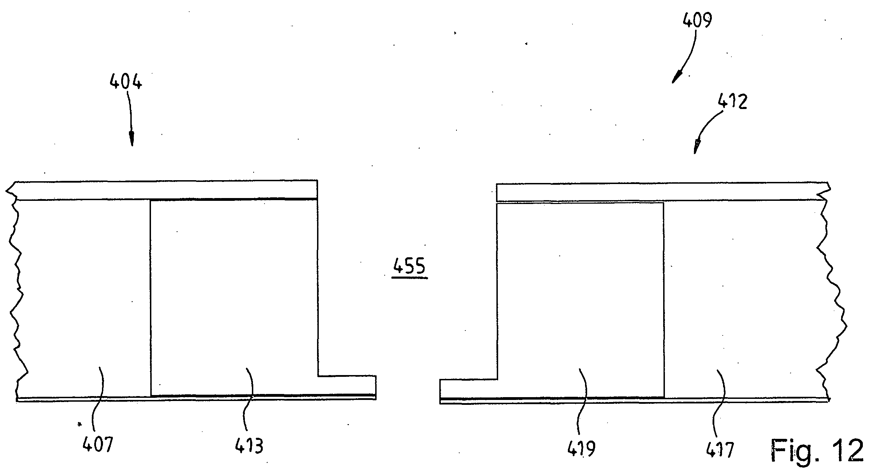

In der Figur 12 ist als Ausführungsvariante zu dem in der Figur 11 gezeigten Fenstersystem ein Fenstersystem 409 in geschnittener Detailansicht dargestellt, wobei hiervon nur eine Fahrzeugwand 404 und ein Füllelement 412 gezeigt sind. Im Unterschied zu dem in der Figur 11 gezeigten Fenstersystem umfasst eine Mittelschicht 407 bzw. 417 jeweils zu einem Spalt 455 hin ein Vollprofil 413 bzw. 419.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Freizeitfahrzeug
- 2: rechte Fahrzeugwand
- 3: Innenseite von 4
- 4: linke Fahrzeugwand
- 5: Ausschnitt in 4
- 6: Außenschicht von 4
- 6a: Oberseite von 6
- 6b: Stirnseite von 6
- 6c: Unterseite von 6
- 7: Mittelschicht von 4
- 7b: Stirnseite von 7
- 8: Innenschicht von 4
- 8b: Stirnseite von 8
- 8c: Sichtseite von 8
- 9: Fenstersystem
- 10: Blendrahmen von 9
- 11: Flügel von 9
- 12: Füllelement von 11
- 13: Vollprofil in 4
- 14: Hartschaum in 4
- 15: Fahrzeuginnenraum
- 16: Außenschicht von 12
- 16a: Oberseite von 16
- 16c: Unterseite von 16
- 17: Mittelschicht von 12
- 17b: Stirnseite von 17
- 18: Innenschicht von 12
- 18b: Stirnseite 1von 18
- 18c: Sichtseite von 18
- 19: Vollprofil in 12
- 20: Hartschaum in 12
- 21: Hinterschnitt von 13
- 22: Flügelrahmen
- 23: erster Schenkel von 10
- 24: Dichtmittel zwischen 10 und 4
- 25: Klebemittel zwischen 10 und 4
- 26: Spalt zwischen 10 und 6
- 27: umlaufender Flanschrand von 4
- 28: Reservoir in 4
- 29: Absatz an 13
- 30: zweiter Schenkel von 10
- 30c: Unterseite von 30
- 31: dritter Schenkel von 10
- 32: Lippendichtung an 10
- 33: Ankersteg von 32
- 34: Nut an 10
- 35: Steg von 32
- 36: Lippe von 32
- 37: Mittelabschnitt von 32
- 38: Profil von 10
- 39: Profil von 22
- 40: erster Schenkel von 22
- 41: Dichtmittel
- 42: Klebemittel zwischen 22 und 16
- 43: Spalt zwischen 22 und 16
- 44: Hinterschnitt in 12
- 45: Reservoir von 12
- 46: Absatz an 19
- 47: zweiter Schenkel von 22
- 47c: Unterseite von 47
- 48: dritter Schenkel von 22
- 49: Lippendichtung von 22
- 50: Ankersteg von 49
- 51: Nut von 22
- 52: Steg von 49
- 53: Lippe von 49
- 54: Mittelabschnitt von 49
- 55: Spalt zwischen 10 und 22
- 56: Schwallwasserdichtung von 9
- 57: vierter Schenkel von 10
- 58: Spalt zwischen 57 und 47
- 59: Dichtung an 57
- 60: Rückseite von 11
- 61: Verbindungsmittel
- 62: Drehgelenk zwischen 10 und 22
- 62a, 62b: erster, zweiter Schenkel von 61
- 62c: Gelenk von 61
- 63: Befestigungsmittel von 62a an 10
- 64: Schraube
- 65: Befestigungsmittel von 62b an 22
- 66: Schraube
- 67: Bohrung in 10
- 110: Blendrahmen
- 132: Lippendichtung
- 134: Nut an 180
- 157: Schenkel von 110
- 159: Dichtung
- 180 - 183: Eckelement von 110
- 180a, 180b: Arm von 180
- 184 - 187: Schenkel von 110
- 189: Nase von 180
- 190: Tunnel von 184
- 191: Profilabschnitt
- 204: Fahrzeugwand
- 205: Ausschnitt
- 206: Außenschicht
- 206b: Stirnseite
- 207: Mittelschicht
- 208: Innenschicht
- 208c: Sichtseite von 208
- 209: Fenstersystem
- 210: Blendrahmen
- 212: Füllelement
- 213: Vollprofil
- 215: . Fahrzeuginnenraum
- 223: erster Schenkel
- 224: Dichtmittel
- 230: umlaufender Schenkel
- 230c: Unterseite von 230
- 232: Lippendichtung
- 236: Lippe
- 255: Spalt
- 292: Gehrung
- 293: Gehrung
- 294: Fahrzeugumgebung

- 304: Fahrzeugwand
- 305: Ausschnitt
- 306: Außenschicht
- 306b: umlaufende Stirnseite
- 307: Mittelschicht
- 307a: Abschnitt
- 308: Innenschicht
- 309: Fenstersystem
- 310: Blendrahmen
- 311: Flügel
- 312: Füllelement
- 316: Außenschicht
- 316b: Stirnseite
- 322: Flügelrahmen
- 323: erster umlaufender Schenkel
- 324: Dichtmittel
- 332: Lippendichtung
- 337: Mittelabschnitt
- 340: erster Schenkel
- 341: Dichtmittel
- 349: Lippendichtung
- 354: Mittelabschnitt
- 353: Lippe

- 404: Fahrzeugwand
- 407: Mittelschicht
- 409: Fenstersystem
- 412: Füllelement
- 413: Vollprofil
- 417: Mittelschicht
- 419: Vollprofil
- 455: Spalt

- A: geschlossener Zustand
- A62: Achse A62
- R132: Radius von 132
- R159: Radius von 159
- W: Drehrichtung um A62

## Patentansprüche

1. Fenstersystem (9; 109; 209; 309) für ein Wohnmobil, ein Freizeitfahrzeug (1) oder einen Wohnwagen umfassend eine Fahrzeugwand (2; 4), einen Blendrahmen (10; 110; 210; 310) und einen gegenüber dem Blendrahmen bewegbaren Flügel (11.; 311),
- wobei die Fahrzeugwand (4; 204; 404) eine Außenschicht (6; 206; 306), eine Mittelschicht (7; 207; 307; 407) und eine Innenschicht (8; 208; 308) umfasst,
- wobei die Fahrzeugwand (4; 204; 404) einen alle Schichten (6; 206; 306, 7; 207; 307; 407, 8; 208; 308) durchdringenden Ausschnitt (5; 205; 305) umfasst,
- wobei der Ausschnitt (5; 205; 305) durch einen einfassenden, insbesondere vollständig umlaufenden Flanschrand (27) der Fahrzeugwand (4; 204; 404) begrenzt ist,
**dadurch gekennzeichnet,**
- **dass** die Außenschicht (6; 206; 306) der Fahrzeugwand (4; 204; 404) über die Mittelschicht (7; 207; 307; 407) und die Innenschicht (8; 208; 308) einfassend, insbesondere vollständig umlaufend in den Ausschnitt (5; 205; 305) übersteht oder dass die Außenschicht (6; 206; 306) und wenigstens ein an die Außenschicht (6; 206; 306) angrenzender Abschnitt der Mittelschicht (7; 207; 307) über die Innenschicht (8; 208; 308) einfassend, insbesondere vollständig umlaufend in den Ausschnitt (5; 205; 305) übersteht,
- **dass** der Blendrahmen (10; 110; 210; 310) mit einem ersten einfassenden, insbesondere vollständig umlaufenden Schenkel (23; 223; 323) unter Zwischenlage eines Dichtmittels (24; 224; 324) an einer einfassenden, insbesondere vollständig umlaufenden Stirnseite (6b; 206b; 306b) und/oder an einer einfassenden, insbesondere vollständig umlaufenden Unterseite (6c) an der Außenschicht (6; 206; 306) anliegt und
- **dass** der Blendrahmen (10; 110; 210; 310) mit einer Unterseite (30c; 230c) eines zweiten einfassenden, insbesondere vollständig umlaufenden Schenkels (30; 230) flächig auf einer Sichtseite (8c; 208c) der Innenschicht (8; 208) aufliegt.

2. Fenstersystem nach Anspruch 1, **dadurch gekennzeichnet, dass** der Flügel (11; 311) einen Flügelrahmeri (22; 322) und ein Füllelement (12; 212; 312; 412) umfasst und einen Fensterflügel oder einen Türflügel bildet.

3. Fenstersystem nach Anspruch 1 oder 2, **dadurch gekennzeichnet, dass** das Fenstersystem (9; 109; 209; 309) wenigstens ein Verbindungsmittel (61) umfasst, durch das bzw. durch die der Flügel (11; 311) als nach außen oder nach innen öffnendes Drehelement oder als nach außen oder nach innen öffnendes Dreh-Kipp-Element oder als Schiebeelement oder als Schiebe-Kipp-Element mit dem Blendrahmen (10; 110; 210; 310) verbunden ist.

4. Fenstersystem nach einem der vorhergehenden Ansprüche, **dadurch gekennzeichnet, dass** die Mittelschicht (7; 207; 307; 407) der Fahrzeugwand (4; 204; 404) angrenzend an die Außenschicht (6; 206; 306) einen sich zu dem Ausschnitt (5; 205; 305) öffnenden Hinterschnitt (21) aufweist, wobei die Mittelschicht (7; 207; 307; 407) angrenzend an den Ausschnitt (5; 205; 305) insbesondere ein Vollprofil (19; 419) umfasst, in welchem der Hinterschnitt (21) ausgebildet ist.

5. Fenstersystem nach Anspruch 1, **dadurch gekennzeichnet, dass** der Blendrahmen (10; 110; 210; 310) eine Lippendichtung (32; 232; 332) umfasst, welche formschlüssig mit dem Blendrahmen (10; 110; 210; 310) verbunden ist und mit einem Steg (35) an einer Oberseite (6a) der Außenschicht (6; 206; 306) der Fahrzeugwand (4; 204; 404) anliegt.

6. Fenstersystem nach Anspruch 2, **dadurch gekennzeichnet, dass** der Flügelrahmen (22; 322) eine weitere Lippendichtung (49; 349) umfasst, welche formschlüssig mit dem Flügelrahmen (22; 322) verbunden ist und mit einem Steg (52) an einer Oberseite (16a) des Flügels (16; 316) anliegt.

7. Fenstersystem nach Anspruch 5 und 6, **dadurch gekennzeichnet, dass** die beiden Lippendichtungen (32, 49; 232; 332, 349) bei geschlossenem Flügel (11; 311) unter gegenseitiger Verformung aneinander anliegen und zusammen eine Schwallwasserdichtung (56) bilden.

8. Fenstersystem nach Anspruch 1 und 2, **dadurch gekennzeichnet, dass** der Blendrahmen (10; 110; 210; 310) einen Schenkel (57; 157) umfasst, welcher den Flügelrahmen (22; 322) hintergreift, wobei an einem freien Ende dieses Schenkels (57; 157) eine Dichtung (59; 159) angeordnet ist, welche bei geschlossenem Flügel (11; 311) an einer in einen Fahrzeuginnenraum (15; 215) weisenden Rückseite (60) des Flügels (11; 311) bzw. des Flügelrahmens (22; 322) dichtend anliegt.

9. Fenstersystem nach Anspruch 2, **dadurch gekennzeichnet, dass** das Füllelement (12; 212; 312; 412) angrenzend an den Flügelrahmen (22; 322) eine Außenschicht (16; 316), eine Mittelschicht (17; 417) und eine Innenschicht (18) umfasst, wobei der Flügelrahmen (22; 322) mit einem ersten einfassenden, insbesondere vollständig umlaufenden Schenkel (40; 340) unter Zwischenlage eines Dichtmittels (41; 341) an einer einfassenden, insbesondere vollständig umlaufenden Stirnseite und/oder an einer einfassenden, insbesondere vollständig umlaufenden Unterseite (16c) an der Außenschicht (16; 316) anliegt und wobei der Flügelrahmen (22; 322) mit einer Unterseite (47c) eines zweiten einfassenden, insbesondere vollständig umlaufenden Schenkels (47) flächig auf einer Sichtseite (18c) der Innenschicht (18) des Füllelements (12; 212; 312; 412) anliegt.

10. Fenstersystem nach Anspruch 9, **dadurch gekennzeichnet, dass** die Mittelschicht (17; 417) des Füllelements (12; 212; 312; 412) angrenzend an die Außenschicht (16; 316) einen sich zu dem Flügelrahmen (22; 322) öffnenden Hinterschnitt (44) aufweist, wobei die Mittelschicht (17; 417) angrenzend an den Flügelrahmen (22; 322) insbesondere ein Vollprofil (19; 419) umfasst, in welchem der Hinterschnitt (44) ausgebildet ist.

11. Fenstersystem nach Anspruch 1 und/oder 2, **dadurch gekennzeichnet, dass** der Blendrahmen (10; 210; 310) und/oder der Flügelrahmen (22; 322) entweder durch ein ringförmig geschlossenes Profil oder durch wenigstens zwei miteinander verbindbare Profilabschnitte gebildet ist..

12. Fenstersystem nach Anspruch 11, **dadurch gekennzeichnet, dass** das ringförmig geschlossene Profil oder der Profilabschnitt entweder einteilig ausgebildet ist oder mehrteilig ausgebildet ist, derart, dass das ringförmig geschlossene Profil wenigstens zwei miteinander verbindbare ringförmig geschlossene Teilprofile umfasst oder dass der Profilabschnitt wenigstens zwei miteinander verbindbare Teilprofile umfasst.

13. Fenstersystem nach Anspruch 11, **dadurch gekennzeichnet, dass** der Blendrahmen (110) und/oder der Flügelahmen (22) zusätzlich zu den Profilabschnitten, welche Seitenelemente bilden, Eckelemente (180 - 183) umfasst, welche die Seitenelemente (184 - 187) verbinden, wobei die Eckelemente (180 - 183) und die Seitenelemente (184 - 187) derart, insbesondere durch Steckverbindungen verbindbar sind, dass bei vollständig zusammengestecktem Blendrahmen (110) eine umlaufende Nut (134) zur Aufnahme eines Ankerstegs (49) der Lippendichtung (49) gebildet ist.

14. Fenstersystem nach Anspruch 13, **dadurch gekennzeichnet, dass** eine in der Nut (134) des Eckelements (180 - 183) geführte Lippendichtung (132) auf einem Radius (R132) geführt ist, welcher sich wenigstes um einen Faktor 5 von einem Radius (R159) unterscheidet, auf welchem eine Dichtung (159) an einer Kante eines Schenkels (157) geführt ist.

## Claims

1. Window system (9; 109; 209; 309) for a mobile home, a recreational vehicle (1) or a caravan comprising a vehicle wall (2; 4), a blind frame (10; 110; 210; 310) and a casement (11; 311) that is movable relative to the frame,
- wherein the vehicle wall (4; 204; 404) comprises an outer layer (6; 206; 306), a middle layer (7; 207; 30); 407) and an inner layer (8; 208; 308),
- wherein the vehicle wall (4; 204; 404) comprises a cutout (5; 205; 305) passing through all the layers (6; 206; 306, 7; 207; 307; 407, 8; 208; 308), wherein the cutout (5; 205; 305) is delimited by a delimiting, in particular completely surrounding, flange edge (27) of the vehicle wall (4; 204; 404),
**characterized in that**
- the outer layer (6; 206; 306) of the vehicle wall (4; 204; 404) protrudes over and de limits, in particular completely surrounds, the middle layer (7; 207; 307; 407) and the inner layer (8; 208; 308) in the cutout (5; 205; 305), or the outer layer (6; 206; 306) and at least one of the sections of the middle layer (7; 207; 307) adjacent to the outer layer (6; 206; 306) protrudes over and delimits, in particular completely surrounds, the inner layer (8; 208; 308) in the cutout (5; 205; 305),
- the blind frame (10; 110; 210; 310) with a first delimiting, in particular completely surrounding, extension (23; 223; 323) with the interposition of a sealing means (24; 224; 324) on a delimiting, in particular completely surrounding, end face (6b; 206b; 306b) and/or on a delimiting, in particular completely surrounding, underside (6c), abuts the outer layer (6; 206; 306), and
- the blind frame (10; 110; 210; 310) with an underside (30c; 230c) of a second delimiting, in particular completely surrounding, extension (30; 230), flatly abuts a visible side (8c; 208c) of the inner layer (8; 208).

2. Window system according to claim 1,
**characterized in that**
the casement (11; 311) comprises a casement frame (22; 322) and a filling element (12; 212; 312; 412) to form a window casement or a door casement.

3. Window system according to claim 1 or 2;
**characterized in that**
the window system (9; 109; 209; 309) comprises at least one connection means (61) by means of which the casement (11; 311) in the form of an outwardly or inwardly opening rotary element, or in the form of an outwardly or inwardly opening rotary tilting element, or as a sliding element, or a tilting and sliding element, is connected with the blind frame (10; 110; 210; 310).

4. Window system according to one of the preceding claims,
**characterized in that**
the middle layer (7; 207; 307; 407) of the vehicle wall (4; 204; 404) adjacent to the outer layer (6; 206; 306) comprises an undercut (21) opening towards the cutout (5; 205; 305), wherein the middle layer (7; 207; 307; 407) adjacent to the cutout (5; 205; 305) comprises, in particular, a full section (19; 419), in which the undercut (21) is formed.

5. Window system according to claim 1,
**characterized in that**
the frame (10; 110; 210; 310) comprises a lip seal (32; 232; 332), which is connected to the frame (10; 110; 210; 310) in a form-fitting manner, and abuts a web (35) on an upper surface (6a) of the outer layer (6; 206; 306) of the vehicle wall (4; 204; 404).

6. Window system according to claim 2,
**characterized in that**
the casement frame (22; 322) comprises a further lip seal (49; 349), which is connected to the casement frame (22; 322) in a form-fitting manner and abuts a web (52) on an upper side (16a) of the casement (16; 316).

7. Window system according to claims 5 and 6,
**characterized in that**
the two lip seals (32, 49; 232; 332, 349) abut one another in mutual deformation when the casement (11; 311) is closed in order to form together a splash water seal (56).

8. Window system according to claim 1 and 2,
**characterized in that**
the blind frame (10; 110; 210; 310) comprises an extension (57; 157), which engages the casement frame (22; 322) from behind, wherein a seal (59; 159) is arranged at a free end of this extension (57; 157) which, when the casement is closed (11; 311), tightly abuts the rear side (60) of the casement (11; 311) or the casement frame (22; 322) in a vehicle interior (15; 215).

9. Window system according to claim 2,
**characterized in that**
the filling element (12; 212; 312; 412) adjacent to the casement frame (22; 322) comprises an outer layer (16; 316), a middle layer (17; 417) and an inner layer (18), wherein the casement frame (22; 322) with a first delimiting, in particular completely surrounding, extension (40; 340), abuts the outer layer (16; 316) with the interposition of a sealing means (41; 341) on a delimiting, in particular completely surrounding, end face and/or a delimiting, in particular completely surrounding, underside (16c), and wherein the casement frame (22; 322) with an underside (47c) of a second delimiting, in particular completely surrounding, extension (47), flatly abuts a visible side (18c) of the inner layer (18) of the filling element (12; 212; 312; 412).

10. Window system according to claim 9,
**characterized in that**
the middle layer (17; 417) of the filling element (12; 212; 312; 412) comprises an undercut (44) opening to the casement frame (22; 322) adjacent to the outer layer (16; 316), wherein the middle layer (17; 417) comprises, in particular, a full section (19; 419) adjacent to the casement frame (22; 322), in which the undercut (44) is formed.

11. Window system according to claim 1 and/or 2;
**characterized in that**
the frame (10; 210; 310) and/or the casement frame (22; 322) is formed by either a closed annular profile or by at least two interconnectable profiled sections.

12. Window system according to claim 11,
**characterized in that**
the closed annular profile or profile section is either in the form of an integral or a multi-part design, so that the closed annular profile comprises at least two interconnectable closed annular part profiles, or that the profile section comprises at least two interconnectable part profiles.

13. Window system according to claim 11,
**characterized in that**
the frame (110) and/or the casement frame (22) in addition to the profile sections, which form side elements, comprises corner elements (180 - 183) connecting the side elements (184 - 187), wherein the corner elements (180 - 183) and the side elements (184 - 187) are so connectable, particularly by means of plug connections, that, with the blind frame (110) fully-assembled, a surrounding groove (134) is formed to receive an anchoring web (49) of the lip seal (49).

14. Window system according to claim 13,
**characterized in that**
a lip seal (132) is guided in the groove (134) of the corner element (180-183) on a radius (R132), which differs by at least by a factor of 5 from a radius (R159) on which a seal (159) is guided at an edge of an extension (157).

## Revendications

1. Système de fenêtre (9 ; 109 ; 209 ; 309) pour un mobile-home, un véhicule de loisirs (1) ou un camping-car comprenant une paroi de véhicule (2 ; 4), un châssis dormant (10 ; 110 ; 210 ; 310) et un battant (11 ; 311) mobile par rapport au châssis dormant,
- la paroi de véhicule (4 ; 204 ; 404) comprenant une couche externe (6 ; 206 ; 306), une couche centrale (7 ; 207 ; 307 ; 407) et une couche interne (8 ; 208 ; 308),
- la paroi du véhicule (4 ; 204 ; 404) comprenant une découpe (5 ; 205 ; 305) traversant toutes les couches (6 ; 206 ; 306, 7 ; 207 ; 307 ; 407, 8 ; 208 ; 308),
- la découpe (5 ; 205 ; 305) étant limitée par un bord de bridage (27) englobant, plus particulièrement entièrement circulaire, de la paroi du véhicule (4 ; 204 ; 404)
**caractérisé en ce que**
- la couche externe (6 ; 206 ; 306) de la paroi du véhicule (4 ; 204 ; 304) dépasse, en les englobant, de la couche externe (7 ; 207 ; 307 ; 407) et de la couche interne (8 ; 208 ; 308) , plus particulièrement entièrement circulaire, dans la découpe (5 ; 205 ; 305) et **en ce que** la couche externe (6 ; 206 ; 306) et au moins une portion, adjacente à la couche externe (6 ; 206 ; 306), de la couche centrale (7 ; 207 ; 307) dépasse, en l'englobant, de la couche interne (8 ; 208 ; 308), plus particulièrement entièrement circulaire dans la découpe (5 ; 205 ; 305),
- le châssis dormant (10 ; 110 ; 210 ; 310) s'appuie, avec un premier montant (23 ; 223 ; 323) englobant, plus particulièrement entièrement circulaire, avec intercalation d'un moyen d'étanchéité (24 ; 224 ; 324), contre une face frontale (6b ; 206b ; 306b) englobante, plus particulièrement entièrement circulaire et/ou contre une face inférieure (6c) de manière englobante, plus particulièrement entièrement circulaire, contre la couche externe (6 ; 206 ; 306) et
- le châssis dormant (10 ; 110 ; 210 ; 310) avec un côté inférieur (30c ; 230c) d'un deuxième montant (30 ; 230) englobant, plus particulièrement entièrement circulaire, s'appuie sur sa surface, sur un côté visible (8c ; 208c) de la couche interne (8 ; 208).

2. Système de fenêtre selon la revendication 1, **caractérisé en ce que** le battant (11 ; 311) comprend un châssis de battant (22 ; 322) et un élément de remplissage (12 ; 212 ; 312 ; 412) et constitue un battant de fenêtre ou un battant de porte.

3. Système de fenêtre selon la revendication 1 ou 2, **caractérisé en ce que** le système de fenêtre (9 ; 109 ; 209 ; 309) comprend au moins un moyen de liaison (61), grâce auquel le battant (11 ; 311) est relié avec le châssis dormant (10 ; 110 ; 210 ; 310) sous la forme d'un élément rotatif s'ouvrant vers l'extérieur ou vers l'intérieur ou un élément oscillo-battant s'ouvrant vers l'extérieur ou vers l'intérieur ou sous la forme d'un élément coulissant ou d'un élément oscillo-coulissant.

4. Système de fenêtre selon l'une des revendications précédentes, **caractérisé en ce que** la couche centrale (7 ; 207 ; 307 ; 407) de la paroi du véhicule (4 ; 204 ; 404) comprend , à proximité de la couche externe (6 ; 206 ; 306), une contre-dépouille (21) s'ouvrant en direction de la découpe (5 ; 205 ; 305), la couche centrale (7 ; 207 ; 307 ; 407) comprenant, à proximité de la découpe (5 ; 205 ; 305), plus particulièrement un profil plein (19 ; 419), dans lequel la contre-dépouille (21) est réalisée.

5. Système de fenêtre selon la revendication 1, **caractérisé en ce que** le châssis dormant (10 ; 110 ; 210 ; 310) comprend un joint d'étanchéité à lèvres (32 ; 232 ; 332), qui est relié par complémentarité de forme avec le châssis dormant (10 ; 110 ; 210 ; 310) et s'appuie, avec une nervure (35), contre le côté supérieur (6a) de la couche externe (6 ; 206 ; 306) de la paroi du véhicule (4 ; 204 ; 404).

6. Système de fenêtre selon la revendication 2, **caractérisé en ce que** le châssis de battant (22 ; 322) comprend un joint d'étanchéité à lèvres (49 ; 349) supplémentaire, qui est relié par complémentarité de forme avec le châssis de battant (22 ; 322) et s'appuie, avec une nervure (52), contre un côté supérieur (16a) du battant (16 ; 316).

7. Système de fenêtre selon la revendication 5 et 6, **caractérisé en ce que** le deux joints d'étanchéité à lèvres (32, 49 ; 232 ; 332 ; 349) s'appuient l'un contre l'autre lorsque le battant (11 ; 311) est fermé et forment ensemble un joint d'étanchéité contre les projections d'eau (56).

8. Système de fenêtre selon la revendication 1 et 2, **caractérisé en ce que** le châssis dormant (10 ; 110 ; 210 ; 310) comprend un montant (57 ; 157) qui s'accroche derrière le châssis du battant (22 ; 322), un joint d'étanchéité (59 ; 159), qui, lorsque le battant (11 ; 311) est fermé, s'appuie de manière étanche contre un côté arrière (60) du battant (11 ; 311) ou du châssis du battant (22 ; 322), orienté vers l'intérieur du véhicule (15 ; 215), se trouvant au niveau d'une extrémité libre de ce montant (57 ; 157).

9. Système de fenêtre selon la revendication 2, **caractérisé en ce que** l'élément de remplissage (12 ; 212 ; 312 ; 412) comprend, à proximité du châssis du battant (22 ; 322), une couche externe (16 ; 316), une couche centrale (17 ; 417) et une couche interne (18), le châssis du battant (22 ; 322) s'appuyant, avec un premier montant (40 ; 340) englobant, plus particulièrement entièrement circulaire, avec l'intercalation d'un moyen d'étanchéité (41 ; 341), contre une face frontale englobante, plus particulièrement entièrement circulaire et/ou contre une face inférieure (16c) englobante, plus particulièrement entièrement circulaire sur la couche externe (16 ; 316) et le châssis du battant (22 ; 322) s'appuyant, avec une face inférieure (47c) d'un deuxième montant (47) englobant, plus particulièrement entièrement circulaire, sur sa surface, sur un côté visible (18c) de la couche interne (18) de l'élément de remplissage (12 ; 212 ; 312 ; 412).

10. Système de fenêtre selon la revendication 9, **caractérisé en ce que** la couche centrale (17 ; 417) de l'élément de remplissage (12 ; 212 ; 312 ; 412) comprend, à proximité de la couche externe (16 ; 316), une contre-dépouille (44) s'ouvrant en direction du châssis du battant (22 ; 322), la couche centrale (17 ; 417) comprenant, à proximité du châssis du battant (22 ; 322), plus particulièrement un profil plein (19 ; 419), dans lequel la contre-dépouille (44) est réalisée.

11. Système de fenêtre selon la revendication 1 et/ou 2, **caractérisé en ce que** le châssis dormant (10 ; 210 ; 310) et/ou le châssis du battant (22 ; 322) est constitué soit d'un profil annulaire fermé soit d'au moins deux portions de profils pouvant être reliées entre elles.

12. Système de fenêtre selon la revendication 11, **caractérisé en ce que** le profil annulaire fermé ou la portion de profil est formée soit d'une seule pièce soit de plusieurs pièces, de façon à ce que le profil annulaire fermé comprend au moins deux profilés partiels annulaires fermés ou **en ce que** la portion de profilé comprend au moins deux profilés partiels pouvant être reliés entre eux.

13. Système de fenêtre selon la revendication 11, **caractérisé en ce que** le châssis dormant (110) et/ou le châssis du battant (22) comprend, en plus des portions de profilés, qui constituent des éléments latéraux, des éléments angulaires (184 à 187), les éléments angulaires (180 à 183) et les éléments latéraux (184 à 187) pouvant être reliés, plus particulièrement par des liaisons enfichées, de façon à ce que, lorsque le châssis dormant (110) est entièrement emboîté, une rainure circulaire (134) soit formée pour le logement d'une nervure d'ancrage (49) du joint d'étanchéité à lèvres (49).

14. Système de fenêtre selon la revendication 13, **caractérisé en ce qu'**un joint d'étanchéité à lèvres (132), guidé dans la rainure (134) de l'élément angulaire (180 à 183) est guidé sur un rayon (R132), qui est différent d'un facteur 5 d'un rayon (R159), sur lequel un joint d'étanchéité (159) est guidé le long du bord d'un montant (157).
